# EUROPEAN PATENT SPECIFICATION

(11) **EP 4 495 337 B1**
(45) Date of publication and mention of the grant of the patent: **02.12.2026**
(21) Application number: 24179298.5
(22) Date of filing: 31.05.2024
(51) Int. Cl.: E02F 9/20, E02F 9/22, E02F 9/26, F16H 61/47, F16H 63/50

(54) **METHOD AND CONTROL SYSTEM FOR ACTUATING A RETURN FUNCTION OF AN ARTICULATED ARM OF A WORK OR AGRICULTURAL VEHICLE**
VERFAHREN UND STEUERSYSTEM ZUM ANSTEUERN EINER RÜCKSTELLFUNKTION EINES GELENKARMS EINES ARBEITS- ODER LANDWIRTSCHAFTLICHEN FAHRZEUGS
PROCÉDÉ ET SYSTÈME DE COMMANDE POUR ACTIONNER UNE FONCTION DE RETOUR D'UN BRAS ARTICULÉ D'UN VÉHICULE DE TRAVAIL OU AGRICOLE

(30) Priority: 01.06.2023 IT 202300011289
(43) Date of publication of application: 22.01.2025
(73) Proprietor: CNH Industrial Italia S.p.A., 10156 Torino (IT)
(72) Inventor: GARRAMONE, Adriano, 10156 Turin (IT); GRAVILI, Andrea, 10156 Turin (IT); VENEZIA, Antonio, 10156 Turin (IT); LIBERTI, Stefano, 10156 Turin (IT)
(74) Representative: CNH Industrial IP Department

(56) References cited:
- JP-A- 2012 188 861
- US-A1- 2002 073 833
- US-A1- 2021 087 777

## Description

### Field of the invention

The present invention relates to the field of methods and systems for controlling the actuation of hydraulic members of work or agricultural vehicles.

### State of the art

In the context of work and agricultural vehicles, the activation of the implements, such as arms and related tools, is achieved by means of a hydraulic circuit.

The hydraulic circuit is powered by a hydraulic pump driven in rotation by a prime mover, most often an internal combustion engine.

With "hydraulic work unit" it is meant one of those components such as arms, buckets, etc.. distinct and separate from those inherent in the propulsion of the work vehicle, such as for example transmissions, braking systems, etc. Below, for convenience, reference is made to a "hydraulic unit" meaning a "work hydraulic member".

In work machines, the best known and most implemented members are the arms equipped with buckets or forks or other devices as shown for example in US2021/087777A1 and JP2012188861A.

The lifting and lowering of the arm is achieved by at least one double-acting linear hydraulic actuator. It comprises a pair of opposing chambers, which alternately fill and empty to effect the raising or lowering of the boom.

The valve for controlling a hydraulic actuator is usually controlled by the operator using a joystick located in the cockpit of the vehicle.

The electric signal generated by the joystick is acquired by a processing unit, which processes it to control the directional control valve arranged to control the corresponding hydraulic actuator. The directional control valve is evidently of the electro-hydraulic type.

The hydraulic circuit that feeds the hydraulic actuator through the directional valve is fed, in turn, by a hydraulic pump driven in rotation by the prime mover. The prime mover is generally of the internal combustion type, although the electrification of vehicles is expected in the coming years and therefore the replacement of the internal combustion engine with one or more electric motors.

When the prime mover is an internal combustion engine, all the hydraulic pumps on board of the vehicle are driven in rotation by the prime mover, therefore, it is connected to the hydraulic feed pump of the hydraulic circuit serving the hydraulic organs and the transmission for vehicle propulsion.

The vehicle transmission is generally composed of a hydrostat, which comprises a variable displacement hydraulic pump, which supplies a hydraulic motor connected directly or indirectly to a vehicle wheel with hydraulic oil.

Generally, the rotational speed of the prime mover is controllable with an accelerator pedal.

When the agricultural or work vehicle is engaged in successive loading, moving and unloading operations, the accelerator pedal is used to control the movement of the vehicle, therefore the rotation speed of the hydraulic pump depends on the position of the accelerator pedal.

Therefore, the actuation speed of a hydraulic member is a function of the vehicle speed.

Unless specifically excluded in the detailed description that follows, what is described in this chapter is to be considered as an integral part of the detailed description.

### Summary if the invention

The object of the present invention is to increase the productivity of a work or agricultural vehicle equipped with an articulated arm comprising a bucket or a fork.

The main idea of the present invention is that of realizing an acceleration procedure of a hydraulic actuator based on the increase of the rotation speed of the prime mover and the contextual adaptation of the hydrostat so as to maintain the speed of the vehicle independent of the rotation speed of the prime mover, in response to the activation of one of the following functions:
- Return to DIG
- Return to Travel
- Return to height
- Floating.

The aforesaid functions are known to those skilled in the art and have in common the fact that they automatically reposition a tool in a predetermined position starting from any remote position.

The first function, Return to Dig, automatically places the bucket or fork in a position suitable for loading material or a pallet.

US20020073833A1 describes the Return to Dig function.

The Return to Travel function is similar to the Return to Dig function, with the difference that it automatically lowers the boom in a position that does not obstruct an adequate view of the surrounding environment while the vehicle is moving. It is typically recalled as the vehicle moves along a route.

The Return to Height function is still similar to the previous ones and has the purpose of bringing the arm to a predetermined height from the ground, for example to be unloaded inside the loading compartment of a transport vehicle, or on a warehouse shelf.

The dependent claims describe preferred variants of the invention, forming an integral part of the present description.

### Brief description of the figures

Further objects and advantages of the present invention will become clear from the detailed description that follows of an embodiment of the same (and of its variants) and from the annexed drawings given for purely explanatory and non-limiting purposes, in which:
Fig. 1 shows a propulsion diagram of the agricultural or work vehicle of the prior art modified according to the present invention;
Fig. 2 shows an electro-hydraulic circuit of an agricultural or work vehicle comprising the propulsion scheme according to Fig. 1;
Fig. 3 shows a work vehicle equipped with an articulated arm;
Fig. 4 shows an exemplary flow diagram of the method object of the present invention.

The same reference numbers and letters in the figures identify the same elements or components or functions.

It should also be noted that the terms "first", "second", "third", "superior", "inferior" and the like may be used herein to distinguish various elements. These terms do not imply a spatial, sequential, or hierarchical order for the modified items unless specifically indicated or inferred from the text.

The elements and characteristics illustrated in the various preferred embodiments, including the drawings, can be combined with each other without however departing from the scope of protection of the present application as described below.

### Detailed description

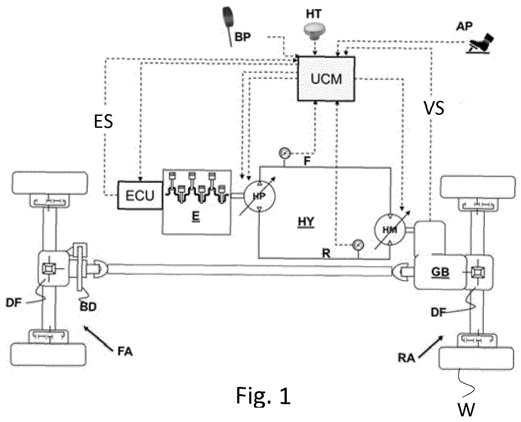

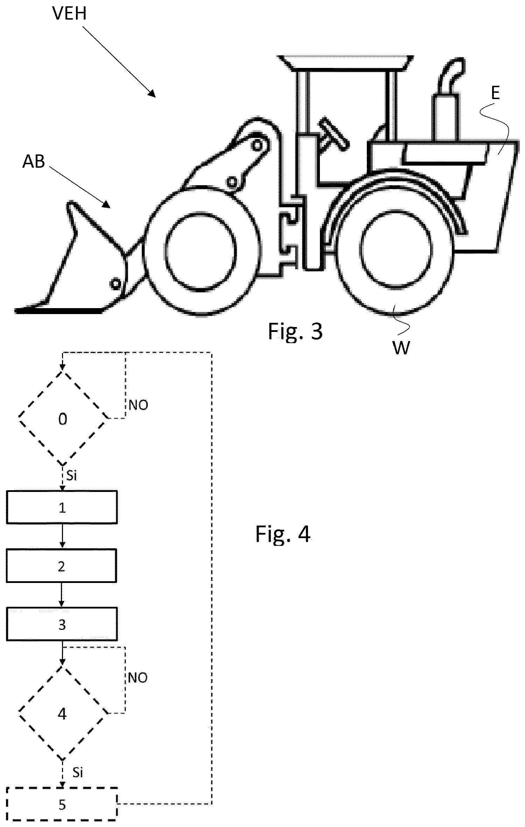

The present invention proposes a control method of the propulsion system of an agricultural or work vehicle VEH, for example according to the scheme of Figs. 1 and 3 of the prior art. The transmission HY comprises an electrically controllable variable displacement hydraulic pump HP and an electrically controllable hydraulic motor HM with fixed or variable displacement.

The shaft of the hydraulic motor is operatively connected to a driving axle RA and/or FA, preferably, but not necessarily, through a discrete ratio gearbox GB. The driving axle can be equipped with a differential DF, which distributes the drive torque to the axle shafts, which drive the wheels W in rotation.

The hydraulic pump and the hydraulic motor are hydraulically interconnected by a high pressure line F and a low pressure line R, also called delivery line and return line.

A processing unit ECU is configured to control the operation of the prime mover E, generally an internal combustion engine and more preferably diesel cycled.

Another processing unit UCM is arranged to control the operation of human/machine interfaces, such as the throttle lever AP, the brake lever BP and the selector position HT to select the park, forward and reverse configurations.

The processing unit UCM receives as input some parameters including the rotation speed ES of the prime mover E and the vehicle speed VS as well as the signals generated by the man/machine interfaces and manages, among other things, the hydrostat HY and work members such as, for example, an articulated arm AB and the like.

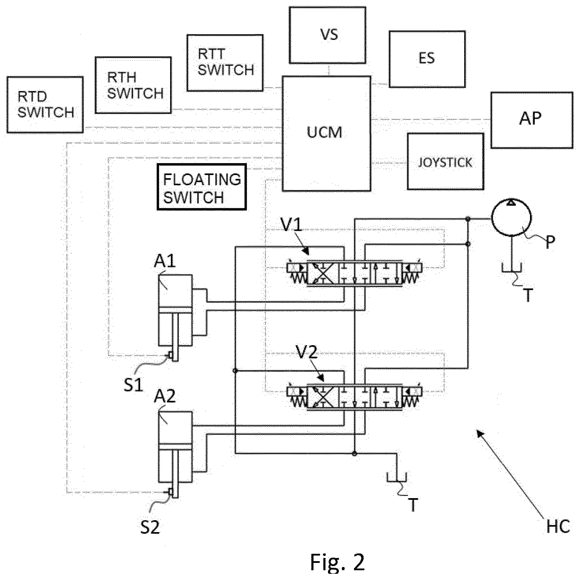

The hydraulic work members are actuated by means of hydraulic actuators, fed by a dedicated hydraulic circuit, fed by a hydraulic pump driven in rotation by the prime mover E, as shown in Fig. 2.

Fig. 2 shows an example of an electrohydraulic circuit HC.

It has a first and a second open center directional valve V1, V2 for supplying the hydraulic actuators A1 and A2, respectively. There is therefore a laminated hydraulic oil collection tank T.

The fixed geometry hydraulic pump P feeds the hydraulic circuit HC drawing hydraulic oil from the collection tank T. The pump P is driven in rotation by the prime mover E. Therefore, comparing the diagrams of Figs. 1 and 2, it is understood that the same prime mover E drives in rotation both pumps HP and P, respectively of the hydrostat and of the hydraulic circuit HC.

To speed up an arm handling operation and therefore to increase the productivity of the agricultural or work vehicle, it is necessary to generate a greater flow of hydraulic oil, which is proportional to the rotation speed of the prime mover. It is not possible to increase the rotation speed of the pump P without increasing the rotation speed of the pump HP. Nor is it possible to increase the oil flow by controlling the displacement of the pump P as it has a fixed displacement.

According to the present invention, when one of the functions is called
- Return to DIG
- Return to Travel
- Return to Height

Then the rotation speed of the prime mover is automatically increased to allow the pump P to generate a greater flow of hydraulic oil and, at the same time, the hydrostat is adjusted so as to keep the vehicle speed unchanged.

When the vehicle is stationary, the inclination of the HP hydraulic pump plate is not changed, so that, also in this case, the vehicle speed remains unchanged.

There is a further function called "Floating" which includes two phases:
- A first stage in which the arm is lowered so as to bring the bucket or fork in a position proximal to the ground,
- A second stage in which both chambers of the boom lifting/lowering actuator A1 are both connected with a hydraulic oil collection tank T. In these conditions, the arm rests naturally on the ground due to the gravitational force.

The Floating function is similar to one of the return functions limited to the first stage.

In known hydrostats, at least the hydraulic pump HP has a variable displacement, this means that to keep the flow of oil generated by the hydraulic pump HP constant, its displacement is proportionally reduced, following the same law of increase of the rotation speed of the prime mover.

At the end of the operation carried out by the hydraulic organ, the rotation speed of the prime mover is restored according to a further law of reduction of the rotation speed and the displacement of the hydraulic pump of the hydrostat is proportionally increased.

Hydrostats are known in which not only the displacement of the hydraulic pump but also of the hydraulic motor can be controlled. In this case, it is possible to compensate the increase and then the reduction of the rotation speed of the prime mover by acting on the control of the displacement of the hydraulic pump HP - with reduction of the relative displacement - and/or of the hydraulic motor HM - with increase of the relative displacement.

As described above, all the aforesaid functions are known to those skilled in the art and have in common the fact of automatically repositioning the articulated arm in a pre-stored configuration starting from any different configuration. For convenience, they will be referred, in the followings, as "return functions".

Obviously, in order to be able to implement the present control, the presence of sensors S1 and S2 associated with the stroke of the actuators A1 and A2 is necessary. Indeed, there is a one-to-one relationship between the stroke of the actuators A1 and A2 and the configuration of the articulated arm.

Sensors S1 and S2 can also be associated with boom and bucket/fork angle.

The execution of the method object of the present invention is caused by the activation of any of the aforementioned functions, schematized in Fig. 2 with the buttons "RTD SWITCH" and/or "RTH SWITCH" and/or "RTT SWITCH" and/or "FLOATING SWITCH".

These buttons are operatively connected with the processing unit UCM described above, as well as the joystick, which allows control of the articulated arm, the accelerator pedal AP and other parameters such as the vehicle speed VS and the rotation speed of the prime mover EX.

The method object of the present invention provides for the execution of the following steps in succession:
- Step 1: Start execution of return function;
- Step 2: acquisition of the vehicle current speed;
- Step 3: increase the rotation speed of the prime mover and contextual control of the hydrostat to keep the vehicle speed unchanged.

The same steps are shown in Fig. 4 according to a possible flow diagram.

The method described here implies that the rotational speed of the prime mover is not under the control of the accelerator pedal as long as the return operation is in progress.

If, while a return function is in progress, the operator varies the position of the accelerator lever, then, this operation impacts exclusively on the hydrostat and not also on the prime mover.

For example, if the operator increases depression of the accelerator pedal while performing a return function, then the increase of the angle of the accelerator pedal impacts on the displacement of the hydraulic pump HP, increasing it, and/or the displacement of the hydraulic motor, reducing it. According to a preferred aspect of the present invention, at the end of the return operation, the rotational speed of the prime mover returns under the control of the accelerator pedal.

Fig. 4 shows further dashed blocks, indicating that they are optional. For example, in the hypothesis that the present invention is implemented through an independent process, then it comprises a preliminary verification step, Step 0, in which the request for the return of the articulated arm to a prearranged position, for example of DIG, is monitored. When the user actually activates the return function, steps 1 - 3 are performed in succession and the end of the return procedure is monitored, verifying step 4. When this is finished, then step 5 is performed which involves bringing the rotation speed of the prime mover back under the control of the accelerator pedal.

The present invention can advantageously be implemented through a computer program comprising coding means for carrying out one or more steps of the method, when this program is executed on a computer. Therefore, it is understood that the scope of protection extends to said computer program and also to computer-readable means comprising a recorded message, said computer-readable means comprising program coding means for carrying out one or more steps of the method, when said program is run on a computer. Variants of the non-limiting example described are possible, without however departing from the scope of protection of the present invention as defined by the appended claims.

## Claims

1. A method of performing a return function of an articulated boom (AB) of a work or agricultural vehicle (VEH), the return function comprising a procedure of moving the boom from any configuration to a pre-stored configuration,
the vehicle being equipped with
- a prime mover (E),
- an electro-hydraulic circuit (HC) comprising two or more hydraulic actuators (A1, A2) serving the articulated arm, respective open center directional valves (V1, V2) and a hydraulic pump (P) to feed the electro-hydraulic circuit, having fixed displacement, operatively connected to the prime mover to be driven in rotation;
- a transmission comprising a hydrostat (HY) comprising a hydraulic pump (HP) and a hydraulic motor (HM) hydraulically connected to the hydraulic pump and arranged to drive a vehicular wheel (W) in rotation;
- an accelerator pedal (AP) arranged to control a rotational speed of the prime mover;
the method, in response to an activation of the return function, comprising a step of increasing the rotational speed of the prime mover and a simultaneous step of adapting a configuration of the hydrostat so as to maintain unchanged a current vehicle speed.

2. The method according to claim 1, further comprising a preliminary step of acquiring a current value of the rotational speed of the prime mover and a current value of the vehicle speed.

3. The method according to claim 1 or 2, wherein said return function is one among
- Return to DIG
- Return to Travel
- Return to Height
- Floating, limited to the arm lowering phase until an arm tool is brought into a proximal position to the ground.

4. The method according to any one of the preceding claims, wherein an action on the accelerator pedal during an execution of the return function causes a change in the current configuration of the hydrostat without changing a current rotational speed of the prime mover.

5. The method according to any one of the preceding claims, wherein, in response to the complete execution of the return function, the rotational speed of the prime mover is a function of a current position of the accelerator pedal.

6. Method according to any one of the preceding claims, wherein said step of increasing the rotation speed of the prime mover brings the prime mover to a prearranged settable rotation speed.

7. Method according to any one of the preceding claims, wherein said increase in rotation speed of the prime mover is performed according to a ramp.

8. The method according to any one of claims 5 - 7, wherein, in response to the complete execution of the return function, the rotational speed of the prime mover is varied to correspond to a position of the accelerator lever according to a ramp.

9. System for performing a return function of an articulated arm (AB) of a work or agricultural vehicle (VEH), the return function comprising a procedure of moving the arm from any configuration to a pre-stored configuration,
the vehicle being equipped with
- a prime mover (E),
- an electro-hydraulic circuit (HC) comprising two or more hydraulic actuators (A1, A2) serving the articulated arm, respective open center directional valves (V1, V2) and a hydraulic pump (P) to feed the electro-hydraulic circuit, fixed displacement, operatively connected to the prime mover to be driven in rotation;
- a transmission comprising a hydrostat (HY) comprising a hydraulic pump (HP) and a hydraulic motor (HM) hydraulically connected to the hydraulic pump and arranged to drive a vehicular wheel (W) in rotation;
- an accelerator pedal (AP) arranged to control a rotational speed of the prime mover;
the system comprising processing means (UCM) configured to manage a feedback function and configured to increase the rotation speed of the prime mover and contextually adapt a configuration of the hydrostat so as to maintain a current speed of the vehicle unchanged, in response to the activation of this return function.

10. System according to claim 9, wherein said processing means are configured to perform all the steps of any one of claims 1 to 8.

## Patentansprüche

1. Ein Verfahren zum Ausführen einer Rückkehrfunktion eines Gelenkauslegers (AB) eines Arbeits- oder Landwirtschaftsfahrzeugs (VEH), wobei die Rückkehrfunktion einen Vorgang des Bewegens des Auslegers aus einer beliebigen Konfiguration in eine vorgespeicherte Konfiguration umfasst, wobei das Fahrzeug ausgestattet ist mit
- einer Antriebsmaschine (E),
- einem elektrohydraulischen Kreis (HC), umfassend zwei oder mehr hydraulische Stellglieder (A1, A2), die den Gelenkausleger bedienen, jeweilige Wegeventile mit offener Mittelstellung (V1, V2) und eine Hydraulikpumpe (P) zur Speisung des elektrohydraulischen Kreises, die ein konstantes Fördervolumen aufweist und funktionell mit der Antriebsmaschine verbunden ist, um drehend angetrieben zu werden;
- einem Getriebe, umfassend einen Hydrostaten (HY), umfassend eine Hydraulikpumpe (HP) und einen Hydraulikmotor (HM), der hydraulisch mit der Hydraulikpumpe verbunden und dazu angeordnet ist, ein Fahrzeugrad (W) in Drehung anzutreiben;
- einem Fahrpedal (AP), das dazu angeordnet ist, eine Drehzahl der Antriebsmaschine zu steuern;
wobei das Verfahren, als Reaktion auf eine Aktivierung der Rückkehrfunktion, einen Schritt des Erhöhens der Drehzahl der Antriebsmaschine und einen gleichzeitigen Schritt des Anpassens einer Konfiguration des Hydrostaten, um eine aktuelle Fahrzeuggeschwindigkeit unverändert beizubehalten, umfasst.

2. Das Verfahren nach Anspruch 1, ferner umfassend einen vorläufigen Schritt des Erfassens eines aktuellen Werts der Drehzahl der Antriebsmaschine und eines aktuellen Werts der Fahrzeuggeschwindigkeit.

3. Das Verfahren nach Anspruch 1 oder 2, worin die besagte Rückgabefunktion eine ist aus
- Rückkehr zu DIG
- Rückkehr zur Fahrt
- Rückkehr zur Höhe
- Schwimmen, beschränkt auf die Armabsenkphase, bis ein Armwerkzeug in eine proximale Position zum Boden gebracht wird.

4. Verfahren nach einem der vorhergehenden Ansprüche, worin eine Beaufschlagung des Fahrpedals während einer Ausführung der Rückkehrfunktion eine Änderung der aktuellen Konfiguration des Hydrostaten bewirkt, ohne eine aktuelle Drehzahl der Antriebsmaschine zu ändern.

5. Das Verfahren nach einem der vorhergehenden Ansprüche, worin als Reaktion auf die vollständige Ausführung der Rückkehrfunktion die Drehzahl der Antriebsmaschine eine Funktion einer aktuellen Position des Fahrpedals ist.

6. Verfahren nach einem der vorhergehenden Ansprüche, worin der Schritt der Erhöhung der Drehzahl der Antriebsmaschine die Antriebsmaschine auf eine vorgegebene einstellbare Drehzahl bringt.

7. Verfahren nach einem der vorhergehenden Ansprüche, worin die genannte Erhöhung der Drehzahl der Antriebsmaschine gemäß einer Rampe durchgeführt wird.

8. Verfahren nach einem der Ansprüche 5-7, worin als Reaktion auf die vollständige Ausführung der Rückstellfunktion die Drehzahl der Antriebsmaschine variiert wird, um einer Position des Beschleunigungshebels gemäß einer Rampe zu entsprechen.

9. System zur Durchführung einer Rückkehrfunktion eines Gelenkauslegers (AB) eines Arbeits- oder Landwirtschaftsfahrzeugs (VEH), wobei die Rückkehrfunktion ein Verfahren zum Bewegen des Auslegers aus einer beliebigen Konfiguration in eine vorgespeicherte Konfiguration umfasst,
wobei das Fahrzeug ausgestattet ist mit
- einer Antriebsmaschine (E),
- einem elektrohydraulischen Kreis (HC), umfassend zwei oder mehr hydraulische Aktuatoren (A1, A2), die den Gelenkausleger bedienen, entsprechende Wegeventile mit offener Mittelstellung (V1, V2) und eine Hydraulikpumpe (P) mit festem Verdrängungsvolumen zur Speisung des elektrohydraulischen Kreises, die funktionell mit der Antriebsmaschine verbunden ist, um drehend angetrieben zu werden;
- einem Getriebe, umfassend einen Hydrostaten (HY), umfassend eine Hydraulikpumpe (HP) und einen Hydraulikmotor (HM), der hydraulisch mit der Hydraulikpumpe verbunden und dazu angeordnet ist, ein Fahrzeugrad (W) in Drehung anzutreiben;
- einem Fahrpedal (AP), das dazu angeordnet ist, eine Drehzahl der Antriebsmaschine zu steuern;
wobei das System Verarbeitungsmittel (UCM) umfasst, die dafür konfiguriert sind, eine Rückkopplungsfunktion zu verwalten, und dafür konfiguriert sind, die Drehzahl der Antriebsmaschine zu erhöhen und kontextbezogen eine Konfiguration des Hydrostaten anzupassen, um in Reaktion auf die Aktivierung dieser Rückkehrfunktion eine aktuelle Geschwindigkeit des Fahrzeugs unverändert beizubehalten.

10. System nach Anspruch 9, worin die besagten Verarbeitungsmittel dazu konfiguriert sind, alle Schritte nach einem der Ansprüche 1 bis 8 durchzuführen.

## Revendications

1. Procédé permettant de mettre en œuvre une fonction de retour d'un bras articulé (AB) d'un véhicule de travail ou agricole (VEH), la fonction de retour comprenant une procédure de déplacement du bras d'une configuration quelconque à une configuration de pré-rangement,
le véhicule étant équipé
- d'un moteur principal (E),
- d'un circuit électrohydraulique (HC) comprenant deux ou plusieurs actionneurs hydrauliques (A1, A2) desservant le bras articulé, des vannes directionnelles (V1, V2) à centre ouvert respectives et une pompe hydraulique (P) pour alimenter le circuit électrohydraulique, ayant un déplacement fixe, relié de manière opérationnelle au moteur principal pour être entraîné en rotation ;
- d'une transmission comprenant un hydrostat (HY) comprenant une pompe hydraulique (HP) et un moteur hydraulique (HM) relié hydrauliquement à la pompe hydraulique et agencé pour entraîner une roue de véhicule (W) en rotation ;
- une pédale d'accélérateur (AP) agencée pour réguler la vitesse de rotation du moteur principal ;
le procédé, en réponse à une activation de la fonction de retour, comprenant une étape consistant à augmenter la vitesse de rotation du moteur principal et une étape simultanée consistant à adapter une configuration de l'hydrostat de façon à maintenir inchangée une vitesse de véhicule actuelle.

2. Procédé selon la revendication 1, comprenant en outre une étape préliminaire d'acquisition d'une valeur actuelle de la vitesse de rotation du moteur principal et d'une valeur actuelle de la vitesse de véhicule.

3. Procédé selon la revendication 1 ou 2, dans lequel ladite fonction de retour est l'une parmi
- retour en position d'excavation
- retour à la position de transport
- retour à la hauteur
- flottement, limité à la phase d'abaissement du bras jusqu'à ce qu'un outil de bras soit amené en position proximale au sol.

4. Procédé selon l'une quelconque des revendications précédentes, dans lequel une action sur la pédale d'accélérateur pendant une exécution de la fonction de retour entraîne un changement dans la configuration actuelle de l'hydrostat sans changer une vitesse de rotation actuelle du moteur principal.

5. Procédé selon l'une quelconque des revendications précédentes, dans lequel, en réponse à l'exécution complète de la fonction de retour, la vitesse de rotation du moteur principal est une fonction d'une position actuelle de la pédale d'accélérateur.

6. Procédé selon l'une quelconque des revendications précédentes, dans lequel ladite étape consistant à augmenter la vitesse de rotation du moteur principal amène le moteur principal à une vitesse de rotation préréglable.

7. Procédé selon l'une quelconque des revendications précédentes, dans lequel ladite augmentation de la vitesse de rotation du moteur principal est mise en œuvre selon une rampe.

8. Procédé selon l'une quelconque des revendications 5 à 7, dans lequel, en réponse à l'exécution complète de la fonction de retour, la vitesse de rotation du moteur principal est modifiée pour correspondre à une position du levier d'accélérateur selon une rampe.

9. Système permettant de mettre en œuvre une fonction de retour d'un bras articulé (AB) d'un véhicule de travail ou agricole (VEH), la fonction de retour comprenant une procédure de déplacement du bras d'une configuration quelconque à une configuration de pré-rangement,
le véhicule étant équipé
- d'un moteur principal (E),
- d'un circuit électrohydraulique (HC) comprenant deux ou plusieurs actionneurs hydrauliques (A1, A2) desservant le bras articulé, des vannes directionnelles (V1, V2) à centre ouvert respectives et une pompe hydraulique (P) pour alimenter le circuit électrohydraulique, un déplacement fixe, relié de manière opérationnelle au moteur principal pour être entraîné en rotation ;
- d'une transmission comprenant un hydrostat (HY) comprenant une pompe hydraulique (HP) et un moteur hydraulique (HM) relié hydrauliquement à la pompe hydraulique et agencé pour entraîner une roue de véhicule (W) en rotation ;
- une pédale d'accélérateur (AP) agencée pour réguler la vitesse de rotation du moteur principal ;
le système comprenant des moyens de traitement (UCM) configurés pour gérer une fonction de rétroaction et configurés pour augmenter la vitesse de rotation du moteur principal et adapter de façon contextuelle une configuration de l'hydrostat de façon à maintenir une vitesse actuelle du véhicule inchangée, en réponse à l'activation de cette fonction de retour.

10. Système selon la revendication 9, dans lequel lesdits moyens de traitement sont configurés pour mettre en œuvre toutes les étapes selon l'une quelconque des revendications 1 à 8.
